**Europäisches Patentamt**

**European Patent Office**

**Office européen des brevets**

(11) Veröffentlichungsnummer: **0 173 892**
A1

## (12) EUROPÄISCHE PATENTANMELDUNG

(21) Anmeldenummer: 85110137.8

(22) Anmeldetag: 13.08.85

(51) Int. Cl.⁴: **B 65 G 67/60**

(30) Priorität: 04.09.84 DE 3432458

(43) Veröffentlichungstag der Anmeldung:
12.03.86 Patentblatt 86/11

(84) Benannte Vertragsstaaten:
AT FR GB SE

(71) Anmelder: **Fried. Krupp Gesellschaft mit beschränkter Haftung**
**Altendorfer Strasse 103**
**D-4300 Essen 1(DE)**

(72) Erfinder: **Krumrey, Alfred, Ing. grad.**
**Jahnstrasse 10**
**D-4100 Duisburg 14(DE)**

(54) Schiffsentlader.

(57) Der Schiffsentlader weist als Aufnahmeorgan eine Schaufelwalze (15) auf, die einen mit Schaufeln (18) versehen hohlen Tragkörper (16) aufweist. Der Tragkörper (16) ist um einen Tragrahmen (2) drehbar gelagert, der wiederum an dem Steilförderer (1) angelenkt und mit einem Abzugsband (30) versehen ist. Die lichte Breite (B) der Schaufeln (18) ist gleich oder größer als zwei Drittel des Durchmessers (D) des durch sie gegebenen Umkreises (41).

An der Stirnseite (20) weist die Schaufelwalze (15) Schneidmesser (26) auf, deren Hauptrichtung um – in der Draufsicht gesehen – eine spitzen Winkel ($\alpha$) von einer durch die Drehachse des Tragkörpers (16) gehenden radialen Linie (27) abweicht.

EP 0 173 892 A1

./...

Croydon Printing Company Ltd.

FIG.3

FRIED. KRUPP GESELLSCHAFT MIT BESCHRÄNKTER HAFTUNG
in Essen

Schiffsentlader

Die Erfindung betrifft einen Schiffsentlader
nach dem Oberbegriff des Patentanspruchs 1.

Schiffsentlader mit Steilförderern weisen, soweit sie das Schüttgut nicht unmittelbar mit der als Steilförderer dienenden Eimer- oder Becherkette aufnehmen (vgl. z.B. AU-PS 445 404 (15 165/70)), an dem freien Ende des Steilförderers ein Schaufelrad mit und ohne Zwischenband zum Steilförderer (vgl. z.B. DE-OS 23 08 421 bzw. DE-PS 21 00 956) oder separate Eimerketten bzw. Becherwerke (vgl. z.B. DE-OS 26 25 693) auf.

Den Schiffsentladern mit einem Schaufelrad haftet der Nachteil an, daß der große Schaufelraddurchmesser eine nur unbefriedigende Restentleerung des Schiffsraums erlaubt. Schiffsentlader mit einem zusätzlichen Becherwerk haben den Nachteil, daß sie eine starke akustische Belästigung hervorrufen.

Der Erfindung liegt die Aufgabe zugrunde, einen Schiffsentlader mit leistungsfähiger, geräuscharmer Entleerung bei guter Restentleerung des Schiffsrumpfes zu schaffen.

Diese Aufgabe wird durch die im Patentanspruch 1 gekennzeichneten Merkmale gelöst. Im Gegensatz zum

0173892

- 2 -

Schaufelrad, das zum Erfassen des Schüttgutes einen Vorschub in Richtung seiner Drehachse erfährt, kann die Schaufelwalze, die durch den drehbaren Tragrahmen und die auf ihr angeordneten Schaufeln gebildet ist, zur Aufnahme des Schüttgutes bevorzugt senkrecht zu ihrer Drehachse bewegt werden. Dabei können die Kanten der Stirnseite der Schaufelwalze mit einem relativ kleinen Radius versehen werden, so daß sich die Ecken an der Schiffswand sehr gut entleeren lassen.

Vorteilhafte Weiterbildungen der Erfindung sind in den Unteransprüchen beschrieben. So wird bei einer Ausbildung des Walzenkörpers nach Anspruch 2 bewirkt, daß die Schneidmesser den Schaufeln auch das an der Stirnseite der Schaufelwalze liegende Schüttgut zuführen.

Durch die Schräglage der Schneidkanten nach Anspruch 3 wird von den Schaufeln zunächst das in der Nähe der Stirnseite gelegene Schüttgut und erst später das von der Stirnseite weiter weg liegende Schüttgut erfaßt und auf das Abzugsband gegeben. Dadurch wird auf dem Abzugsband ein gleichmäßiger Förderstrom erzeugt. Die gleiche Wirkung wird durch die Ausbildung der Schurrenanordnung nach Anspruch 4 noch verbessert.

Durch die nach Anspruch 5 vorgesehene weitere Schurre ist es möglich, daß das vom Abzugsband herabfallende Rieselgut den Schaufeln erneut zugeleitet werden kann und somit Verstopfungen innerhalb der Schaufelwalze vermieden werden.

Durch die gemäß dem Anspruch 6 vorgesehene Höhenmeßeinrichtung ist es möglich, den Volumenstrom auf dem Abzugsband zu erfassen und die Drehzahl der Schaufelwalze und/oder die Geschwindigkeit des Abzugsbandes bei Schwankungen des Volumenstromes entsprechend zu steuern.

Ein Ausführungsbeispiel der Erfindung ist in der Zeichnung dargestellt und wird im folgenden näher erläutert. Es zeigen:

Fig. 1 einen Steilförderer und eine Schaufelwalze eines Schiffsentladers in einer auszugsweisen Seitenansicht,

Fig. 2 die Schaufelwalze nach Fig. 1 in der Stirnansicht,

Fig. 3 den Steilförderer und die Schaufelwalze in einem Längsschnitt,

Fig. 4 die Schaufelwalze in einem Querschnitt längs der Ebene IV-IV in Fig. 3,

Fig. 5 die zum Abzugsband innerhalb der Schaufelwalze führende Schurre in der Draufsicht und

Fig. 6 die Schurre in einem Querschnitt längs der Linie VI-VI in Fig. 5.

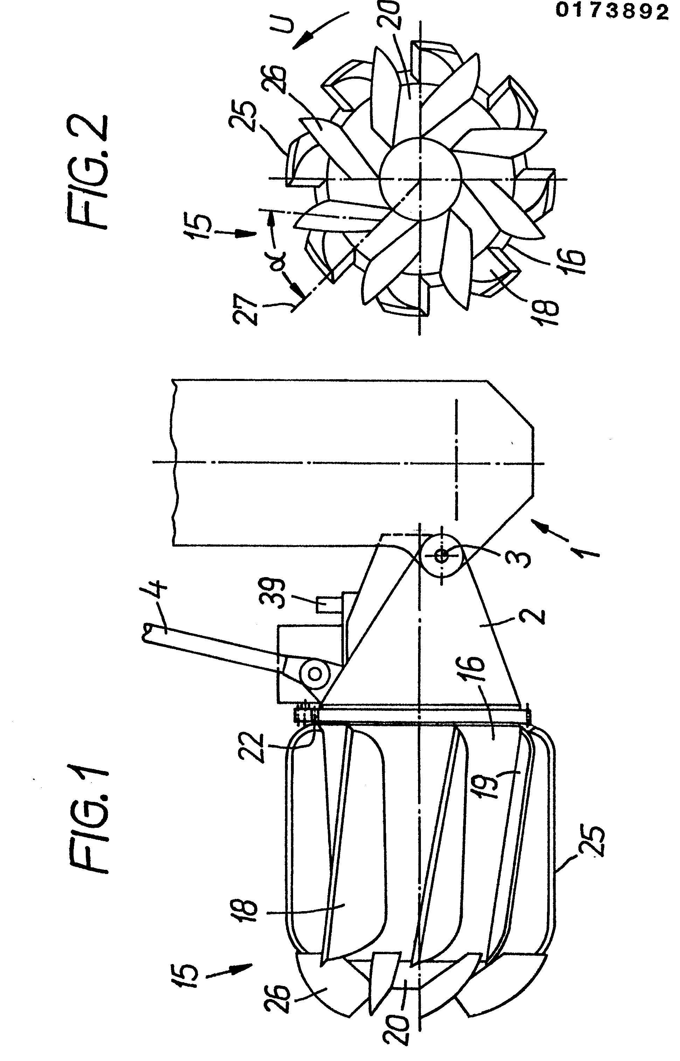

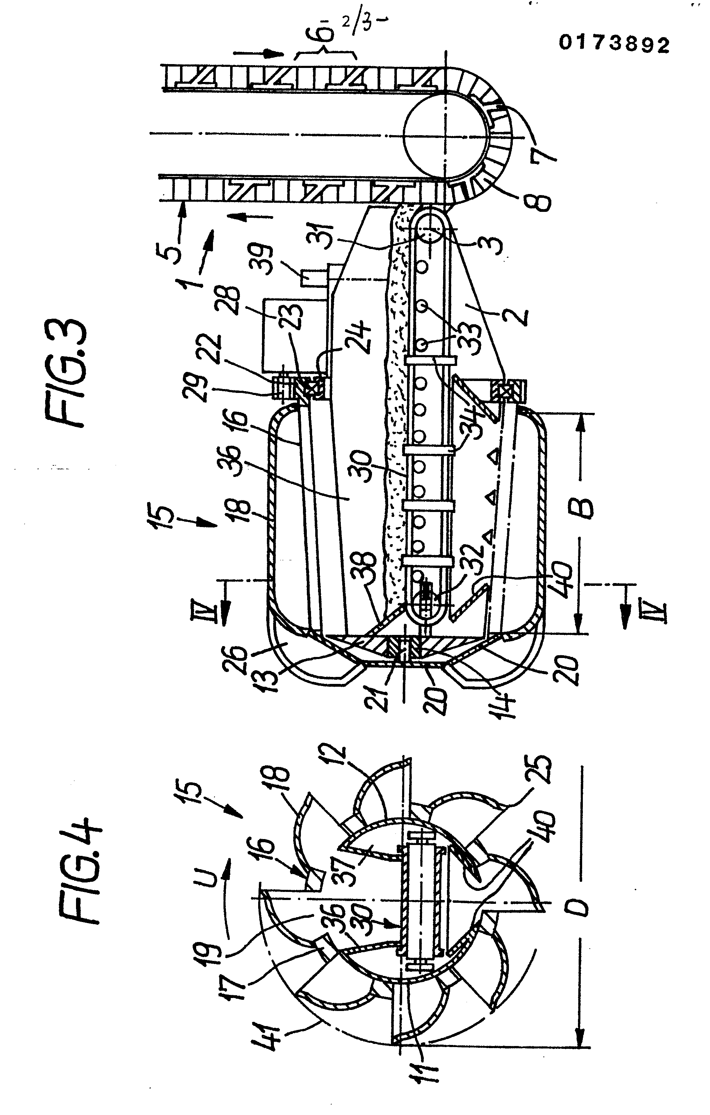

In den Fig. 1 und 3 ist der untere Teil eines Steilförderers 1 eines Schiffsentladers dargestellt, an dem ein Hilfs- oder Tragrahmen 2 um eine waagerechte Achse 3 schwenkbar gelagert ist. Der Hilfsrahmen 2 kann mit Hilfe eines (nicht dargestellten) Hydraulikzylinders um die waagerechte Achse 3 angehoben und abgesenkt werden, wobei die Kolbenstange 4 des Hydraulikzylinders an den Hilfsrahmen 2 angelenkt ist.

Der Steilförderer 1 weist einen endlosen Wellkantengurt 5 mit kastenförmigen Taschen 6 auf, die, wie in der Z. bulk solids handling 4 (1984) 1, S. 105-112 beschrieben, durch Mitnehmer 7 und seitliche biegsame wellenförmige Kanten oder Stege 8 gebildet werden.

Der Hilfsrahmen 2 weist zwei Seitenwände 11, 12 auf, die einen Teil eines Kegelstumpfmantels ausmachen. An dem schwenkbaren Ende des Hilfsrahmens 2 sind die Seitenwände 11, 12 durch eine gemeinsame kreisrunde Stirnwand oder -platte 13 verbunden, die in ihrer Mitte eine Lageraufnahme 14 aufweist.

Von seinem schwenkbaren Ende ist der Hilfsrahmen 2 über einen Teil seiner Länge von einer Schaufelwalze oder -trommel 15 umgeben, die einen steilkonischen Tragkörper 16 mit stegartigen Flächenteilen 17 und mit auswechselbaren Schaufeln 18 aufweist, wobei sich durch die Schaufeln 18 bedingte Ausnehmungen 19 mit den Flächenteilen 17 in Umfangsrichtung abwechseln. Die Schaufelwalze 15 weist eine flachkonische, in Richtung auf den Hilfsrahmen 2 konvex ausgebildete Stirnwand 20 mit einem zentrischen Lagerzapfen 21 auf, der in die Lageraufnahme 14 der Stirnwand 13 des Hilfsrahmens 2 eingreift. An ihrem anderen Ende weist die Schaufelwalze 15 einen mit einer Außenverzahnung versehenen Tragring 22 auf, der mit Hilfe eines Wälzlagers 23 auf einem feststehenden Tragring 24 des Hilfsrahmens 2 gelagert ist. Die Schaufeln 18 erstrecken sich im wesentlichen über die ganze Länge des kegelstumpfförmigen Tragkörpers 16. In Umfangsrichtung U der Schaufelwalze 15 gesehen, ist das dem Steilförderer 1 zugewandte Ende der Schneid- oder Grabkanten 25 der Schaufeln 16 gegenüber dem der Stirnseite zugewandten Ende zurückversetzt, d.h. die Schneidkanten 25 sind schräg angeordnet, wobei deren dem Steilförderer 1 zugewandtes Ende nacheilt.

An der Stirnwand 20 der Schaufelwalze 15 sind außerdem Schneidmesser 26 vorgesehen. Diese Messer sind auswechselbar angeordnet, um deren Form dem jeweiligen Radius zwischen der Wand und dem Boden des zu entleerenden Schiffsraums schnell anpassen zu können. Die Schneidmesser 26 sind in ihrer Hauptrichtung unter einem Winkel $\alpha$ gegen eine durch die Drehachse der Schaufelwalze 15 gehende radiale Linie 27 geneigt, um den Schaufeln 18 das Schüttgut - insbesondere bei einem stirnseitigen Vorschub der Schaufelwalze 15 - zuzuführen.

Auf dem Hilfsrahmen 2 befindet sich ferner ein Antrieb 28 mit einem Antriebsritzel 29, das in die Außenverzahnung des Tragrings 22 eingreift.

Der Hilfsrahmen 2 weist im wesentlichen über seine ganze Länge ein Abzugsband 30 mit einer unmittelbar am Steilförderer 1 befindlichen Antriebs- und Abwurftrommel 31 und einer an der Stirnwand 13 befindlichen Umlenktrommel 32 und einer Vielzahl von Tragrollen 33 auf. Die Drehachse der Abwurftrommel 31 ist dabei identisch mit der Schwenkachse 3 des Hilfsrahmens 2. Seitlich von dem Abzugsband 30 sind in dem Hilfsrahmen 2 Führungseinrichtungen 34 angeordnet, die einen geraden Lauf des Abzugsbandes 30 sicherstellen.

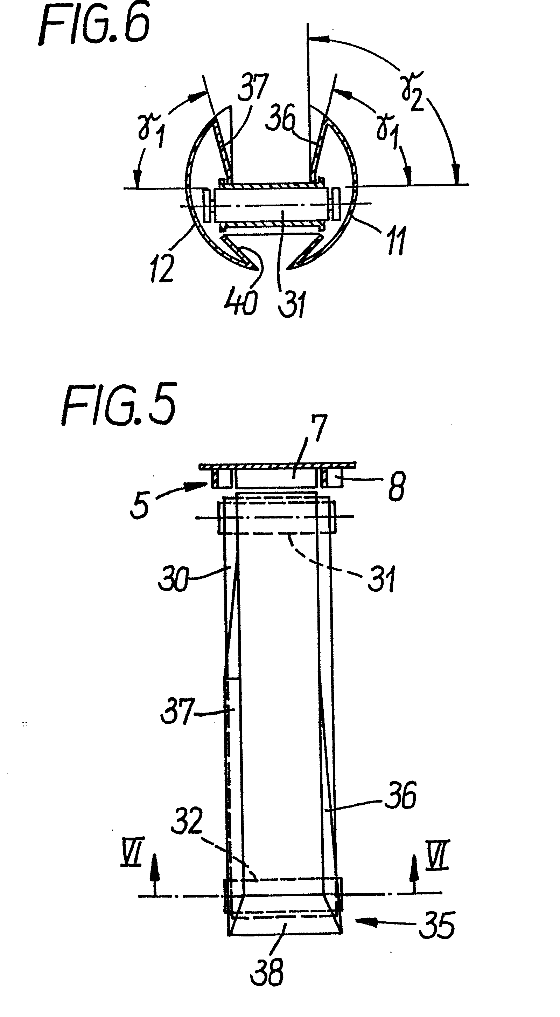

Weiterhin weist der Hilfsrahmen 2 eine obere Schurre 35 auf, die aus zwei seitlichen und einem stirnseitigen Schurrenblech 36, 37 bzw. 38 besteht. Die seitlichen Schurrenbleche 36, 37 reichen von der oberen Kante der Seitenwände 11, 12 bis unmittelbar über das Abzugsband 30. Das stirnseitige Schurrenblech 38 reicht von der Stirnwand 13 bis unmittelbar über die Umlenkrolle 32. Das in Förderrichtung des Abzugsbandes 30 gesehen rechte Schurrenblech 36 weist zunächst, d.h. an dem vom Wellkantengurt 5 wegweisenden Ende den gleichen Neigungswinkel $\gamma_1$ wie das linke Schurrenblech 37 auf. In Förder- oder Abzugsrichtung gesehen, vergrößert sich der Neigungswinkel $\gamma_1$ des rechten Schurrenblechs innerhalb des Bereichs der Schaufelwalze 15 jedoch bis zu einem Winkel $\gamma_2$ (vgl. Fig. 6), so daß die obere Kante bzw. der obere Rand des rechten Schurrenbleches 36 bis zur (gedachten) Längsmittelebene des Abzugsbandes 30 an der Austragsseite geringer ist als an der Stirnseite. Im Bereich des Steilförderers 1 ist der Abstand der dort senkrecht ausgerichteten Schurrenbleche 36, 37 etwas kleiner als der Innenabstand der Wellkanten 8 des Gurtes 5.

Über dem Ende des Abzugsbandes 30 ist in dem Hilfsrahmen 2 eine Ultraschallhöhenmeßeinrichtung 39 angeordnet, mit der der Volumenstrom auf dem Abzugsband 30 erfaßt werden kann. Unterhalb des Abzugsbandes 30 befindet sich eine weitere Schurre 40, die das vom Abzugsband 30 herunterrieselnde Schüttgut durch die durch die beiden Seitenwände 11, 12 des Hilfsrahmens 2 gegebene Ausnehmung den Schaufeln 18 erneut zuleiten kann.

0173892

- 7 -

In Abwandlung des beschriebenen Ausführungsbeispiels
kann der Tragkörper 16 der Schaufelwalze 15 auch
zylindrisch ausgebildet sein.

- 7 -

Patentansprüche

1. Schiffsentlader
   mit einem Aufnahmeorgan
   und einem von diesem beschickbaren Steilförderer,
   d a d u r c h   g e k e n n z e i c h n e t,
   daß das Aufnahmeorgan als mit Schaufeln (18)
   versehener hohler Tragkörper (16) ausgebildet
   ist, der um einen an dem Steilförderer (1) angelenkten und mit einem Abzugsband (30) versehenen
   Tragrahmen (2) drehbar gelagert ist,
   wobei die lichte Breite (B) der Schaufeln (18)
   gleich oder größer als zwei Drittel des Durchmessers (D) des durch sie gegebenen Umkreises (41)
   ist.

2. Schiffsentlader nach Anspruch 1, dadurch gekennzeichnet, daß der drehbare Tragkörper (16) an
   seiner Stirnseite (20) mit lösbar verbundenen
   Schneidmessern (26) versehen ist, deren Hauptrichtung - in der Draufsicht gesehen - um einen
   spitzen Winkel ($\alpha$) von einer durch die Drehachse
   des Tragkörpers (16) gehenden radialen Linie (27)
   abweicht.

3. Schiffsentlader nach Anspruch 1, dadurch gekennzeichnet, daß die Schneidkanten (25) zu den Schaufeln (18)
   schräg angeordnet sind, wobei das von der Stirnseite
   (20) abgewandte Ende der Schneidkanten (25) gegenüber
   dem der Stirnseite zugewandten Ende nacheilt.

4. Schiffentlader nach Anspruch 1,
   dadurch gekennzeichnet, daß der
   Tragrahmen (2) eine Schurrenanordnung (35)
   mit zwei schräg zum Abzugsband (30) weisenden
   seitlichen Schurrenblechen (36, 37) aufweist,
   wobei die Neigung ( $\gamma$ ) des Schurrenblechs (36),
   über das die Schaufeln (18) entleeren, mit der
   Entfernung von der Stirnseite (20) in Drehrichtung (U) des Tragkörpers (16) zunimmt.

5. Schiffsentlader nach Anspruch 1,
   dadurch gekennzeichnet, daß der Tragrahmen (2)
   eine unter dem Abzugsband (30) befindliche,
   zum jeweils unteren Teil des Tragkörpers (16)
   weisende weitere Schurre (40) aufweist.

6. Schiffentlader nach Anspruch 1,
   dadurch gekennzeichnet, daß über dem Ende des
   Abzugsbandes (30) eine Höhenmeßeinrichtung (39)
   angeordnet ist.

*FIG.1*

*FIG.2*

15  18  22  4  39

26

20

19  16

25  2  3  1

27  15  25  26  U

α  -1/3-

20

18  16

0173892

# FIG.4

# FIG.3

0173892

0173892

*FIG.6*

*FIG.5*

**Europäisches Patentamt**

**EUROPÄISCHER RECHERCHENBERICHT**

0173892

Nummer der Anmeldung

| | EINSCHLÄGIGE DOKUMENTE | | EP 85110137.8 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| A | GB - A - 2 053 842 (DRG LIMITED)<br>* Gesamt *<br>---- | 1 | B 65 G 67/60 |
| | | | **RECHERCHIERTE SACHGEBIETE (Int. Cl 4)**<br><br>B 65 G |

Der vorliegende Recherchenbericht wurde für alle Patentansprüche erstellt.

| Recherchenort | Abschlußdatum der Recherche | Prüfer |
|---|---|---|
| WIEN | 20-11-1985 | PISSENBERGER |